(19)

Europäisches
Patentamt
European
Patent Office
Office européen
des brevets

(11) **EP 3 016 019 A2**

(12) **EUROPEAN PATENT APPLICATION**

(43) Date of publication:
04.05.2016 Bulletin 2016/18

(51) Int Cl.:
**G06K 7/00** (2006.01)  **G06K 7/10** (2006.01)
**G06K 7/14** (2006.01)  G11B 20/10 (2006.01)

(21) Application number: 15190517.1

(22) Date of filing: **20.10.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **30.10.2014 EP 14306739**

(71) Applicant: **Thomson Licensing**
**92130 Issy-les-Moulineaux (FR)**

(72) Inventors:
• **Chen, Xiaoming**
**30659 Hannover (DE)**
• **Huetter, Ingo**
**30982 Pattensen (DE)**
• **Blawat, Meinolf**
**30659 Hannover (DE)**
• **Gaedke, Klaus**
**30659 Hannover (DE)**

(54) **APPARATUS AND METHOD FOR DETECTING A SYMBOL ON A TWO-DIMENSIONAL STORAGE MEDIUM**

(57)  The invention relates to an apparatus and method for detecting a symbol from a set of readout values from a local neighborhood of a two-dimensional storage medium (4), comprising the steps of: evaluating a joint probability distribution (p(Y|Ai)) for a given observation and a complete set of data patterns (Ai) in the local neighborhood; choose as detection output a weighted average of the center values of the data patterns (Ai), using the values of the associated joint probability distribution (p(Y|Ai)) as weights; wherein the joint probability distribution (p(Y|Ai)) is a multi variant Gaussian probability distribution which employs vectorial observations (Y), vectorial averages ($\mu$), and covariance matrixes (C).

Fig. 2

## Description

The invention relates to a method for detecting a symbol from a set of readout values from a local neighborhood of a two-dimensional storage medium, wherein the method comprises the steps of:

- evaluating a joint probability distribution for a given observation and the complete set of data patterns in the local neighborhood;

- choose as detection output a weighted average of the center values of the data patterns, using the values of the associated joint probability distribution as weights.

Furthermore, the invention relates to an apparatus for detecting a symbol from a set of readout values from a local neighborhood of set symbol on a two-dimensional storage medium.

Reliable long-term data storage becomes more and more important and it is a challenging task. A promising technology is data storage on microfilm, which is expected to have a life time up to several hundred years.

For data storage on microfilm, a print-scan process is applied. In the write process, a sequence of input bits is encoded, the encoded bit sequence is then typically subject to interleaving and subsequent transformation into a two-dimensional structure, for example a matrix of binary elements. The matrix serves as input to a modulation scheme that is applied to control for example a laser exposure apparatus for writing the data patterns on the microfilm.

A distance between the data points of the data pattern is of significant influence on the achievable storage capacity per square unit. However, when reducing the grid space for writing of the pattern, inter-symbol interference increases.

During the readout process, the data pattern on the microfilm is transferred to an output sequence of estimated bits. Assumed the system works perfectly, the readout bit sequence is identical to the original bit sequence. In practice however, intersymbol interference distortions and noise lead to bit errors.

In an attempt to enhance the allocation of detected gray values of the individual bits to binary values in the output bit-stream, Voges C., A two-dimensional channel model for digital data storage on microfilm, IEEE Trans COM-58 (8), 2011 discloses a retrieving model, wherein the local neighborhood of the symbol is taken into account for determination of the symbol's bit-value. For example, in a laser exposure system, it can be reasonably assumed that the intersymbol interference at a given position is only significantly influenced by the eight neighboring (direct and diagonal) data points. Consequently, a pattern like a 3x3 square is analyzed for determination of a bit value of the central symbol. The observed value of the center symbol and assumed patterns of the neighborhood are linked. Within this context, all binary patterns for the 3x3 square, i.e. 512 patterns, are analyzed.

Furthermore, the probability density functions are not necessarily Gaussian. They are modeled as Gaussian Mixture Models. The output of the center symbol is a weighted average of the center values of all the analyzed data patterns, wherein a mean value and a variance value for the individual component of the Gaussian distribution is applied, respectively.

Although, the disclosed model provides a fairly good simulation of the write and scan process using a channel model, due to the large overlap between the probability distributions for the bit values, there is an undesirable high symbol error rate.

It is an object of the invention to provide an apparatus and a method for detecting a symbol from a set of readout values on a two-dimensional storage medium, which is enhanced with respect to a bit error rate.

The object is solved by a method for detecting a symbol from an observation comprising a set of readout values from a local neighborhood of a two-dimensional storage medium, comprising the steps of:

- evaluating a joint probability distribution for the observation and a complete set of data patterns in the local neighborhood;

- choose as a detection output a weighted average of the center values of the data patterns, using the values of the associated joint probability distribution as weights;

wherein the method is further enhanced in that a joint probability distribution is used, which employs vectorial observations, vectorial averages, and covariance matrixes.

Advantageously, the method provides a reduced bit error rate for detection of the bit value of the symbol. Depending on the particular implementation, a reduction of the bit error rate of more than one magnitude can be expected.

In the method according to the invention, not only the symbol but also further symbols being located in the local neighborhood of said symbol on the two-dimensional storage medium are captured and analyzed. Consequently, inter symbol interference and noise is reasonably taken into account. The bit error rate is significantly reduced by application of a method having a reasonable complexity.

In an advantageous embodiment of the invention, a probability of the corresponding data pattern is applied as a further weight for determination of the weighted average of the center values of the data patterns.

If there is no a priori information about the data patterns available, all patterns are given equal a priori probability.

Weighting the value of the probability density function by the probability of the corresponding data pattern reduces the bit error rate still further.

According to another advantageous embodiment of the invention, the step of determining soft information being indicative of a reliability of the detection output, wherein in particular a difference between the weighted averages of the center values of the data patterns of the complete set of data patterns serves as a basis for said soft information.

In still another embodiment of the invention, the method further comprises the step of capturing at least a value of the symbol from the two-dimensional storage medium, wherein the soft information is exploited for error correction of the symbol capturing.

In other words, based on evaluated probability density functions, the center symbol for the considered readout pattern is determined as the one resulting in the maximum probability. The reliability of this decision is calculated according to the evaluated probability density functions. In a situation, in which the maximum probability for the decided symbol is significantly higher than the maximum probability of the other symbol, the decision is regarded highly reliable. Otherwise, the decision is less reliable.

This reliability information is also referred as soft information, which can be further exploited in the error correction during decoding. The error correction during decoding can deliver estimated a priori information for individual symbols. The detector performance can be enhanced. The information exchange between the detector and the unit performing the decision can be carried out in an iterative process until no further improvement is made. This measure reduces the bit error rate still further.

The method according to the invention is further enhanced in that it further comprises the step of capturing from the two-dimensional storage medium: a value of the symbol and further values of further symbols being located in the local neighborhood, wherein the captured values are arranged in a vector so as to provide the given vectorial observations.

Furthermore, the detection output is advantageously a binary output of the detected value of the symbol, and wherein said binary output is determined by choosing a maximum of a first and a second probability for the first and second binary value, respectively, wherein

- the first probability for the first binary value is determined by summing up values of the joint probability distribution for the observation and a first sub-set of the complete set of data patterns comprising the first binary value as the center value and

- the second probability for the second binary value is determined by summing up values of the joint probability distribution for the observation and a second sub-set of the complete set of data patterns comprising the second binary value as the center value.

In another advantageous embodiment of the invention, the complete set of data patterns includes all permutations of binary values that can be arranged in the data pattern.

The local neighborhood of the symbol advantageously includes all next neighbor symbols of said symbol on the two-dimensional storage medium, wherein in particular the data pattern is a matrix comprising said symbol as the center element. In particular, a 3x3 matrix is employed.

Furthermore, it cannot be assumed that the inter symbol interference and the noise is truly Gaussian in all cases. Consequently, a mixture of Gaussian distributions is applied and the joint probability distribution is a Gaussian Mixture Model distribution.

Employing a multi variant Gaussian mixture model instead of the simple model, which is disclosed in Voges C., A two-dimensional channel model for digital data storage on microfilm, IEEE Trans. COM-58 (8), 2011 enhances the bit error rate for symbol detection. According to measurements for binary modulation (1 bit/pixel) and 3x3 square data patterns, i.e. 512 Gaussian mixture models are estimated, the bit error rate is reduced from 2,5e-4 to 1e-5. Within this context eight Gaussian distributions are considered in the Gaussian mixture model. For four level modulation (2 bit/pixel), cross patterns with five values have been used, i.e. there is a total of 1024 data patterns and 1024 Gaussian mixture models are estimated. In this context, the bit error rate is reduced from 0,12 to 1,3e-2.

The object is further solved by an apparatus for detecting a symbol from an observation comprising a set of readout values from a local neighborhood of a two-dimensional storage medium, comprising:

- a first evaluation unit configured to evaluate a joint probability distribution for the observation and all data patterns which are possible in the local neighborhood;

- a selection unit configured to choose as a detection output a weighted average of the center values of the data patterns, using the values of the associated joint probability distribution as weights; and characterized in that the joint probability distribution is used, which employs vectorial observations, vectorial averages, and covariance matrixes.

In another advantageous embodiment of the invention, the apparatus is further configured in that a probability of the corresponding data pattern is applied as a further weight for determination of the weighted average of the center values of the data patterns.

Advantageously, the apparatus further comprises a second evaluation unit configured to determine soft information being indicative of a reliability of the detection output, wherein in particular a difference between the weighted averages of the center values of the data patterns serves as a basis for said soft information, wherein further in particular the apparatus comprises a reader configured to capture at least a value of the symbol from the two-dimensional storage medium, wherein the soft information is exploited for error correction of the symbol capturing.

The apparatus is further advantageously enhanced in that it further comprises a reading unit being configured to capture from the two-dimensional storage medium: a value of the symbol and further values of further symbols being located in the local neighborhood, wherein the captured values are arranged in a vector so as to provide the given vectorial observations.

In still another advantageous embodiment of the invention, the detection output is a binary output of the detected value of the symbol, and wherein the selection unit is further configured in that said binary output is determined by choosing a maximum of a first and a second probability for the first and second binary value, respectively, wherein

- the first probability for the first binary value is determined by summing up values of the joint probability distribution for the observation and a first sub-set of the complete set of data patterns comprising the first binary value as the center value and

- the second probability for the second binary value is determined by summing up values of the joint probability distribution for the observation and a second sub-set of the complete set of data patterns comprising the second binary value as the center value.

Finally, the apparatus is advantageously enhanced in that the local neighborhood of the symbol includes all next neighbor symbols of said symbol on the two-dimensional storage medium, wherein in particular the data pattern is a matrix comprising said symbol as the center element.

Same or similar advantages, which have already been mentioned with respect to the method according to aspects of the invention apply to the apparatus according to aspects of the invention in a same or a similar way and are therefore not repeated.

Further characteristics of the invention will become apparent from the description of the embodiments according to the invention together with the claims and the included drawings. Embodiments according to the invention can fulfill individual characteristics or a combination of several characteristics.

The invention is further described below, without restricting the general intent of the invention, based on exemplary embodiments, wherein reference is made expressly to the drawings with regard to the disclosure of all details according to the invention that are not explained in greater detail in the text. The drawings show in:

FIG. 1    a simplified block diagram illustrating the print and read process for long term data storage on microfilm,

FIG. 2    a simplified flow-chart illustrating a method for detecting a symbol from a two-dimensional storage medium, and

FIG. 3    a simplified block diagram showing an apparatus for detecting a symbol from a two-dimensional storage medium.

In the drawings, the same or similar types of elements or respectively corresponding parts are provided with the same reference numbers in order to prevent the item from needing to be reintroduced.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

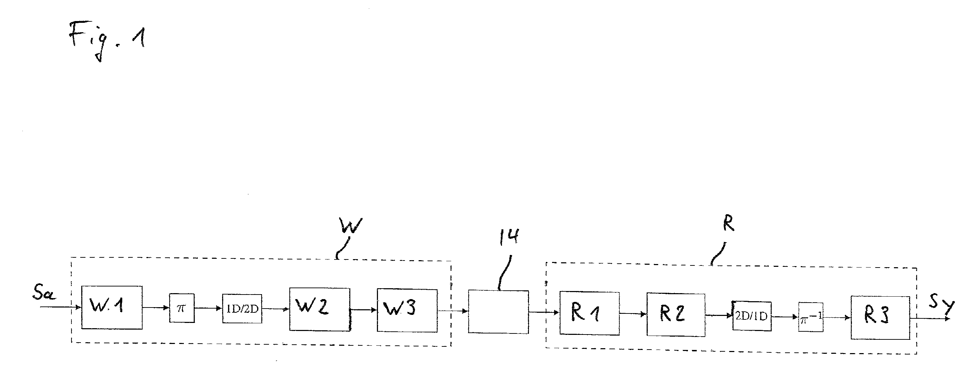

In FIG. 1, there is a simplified block diagram illustrating the print and read process for long term data storage on microfilm. The write process W, which is shown on the left, includes receiving an input data stream Sa, which is first subject to channel encoding, represented by block W1. The encoded bit sequence is subsequently interlaced (block $\pi$). The encoded and interlaced bit stream is transformed into a matrix (block 1D/2D), which means that the stream of bits is converted into a data pattern. Further steps during the write process W are binary modulation (block W2) and, by way of an example only, laser exposure of a microfilm 14 (block W3). Naturally, other suitable writing technologies can be implemented instead of the laser exposure.

The read process R for reading-out data from the microfilm 14 comprises scanning an image processing (block R1). The scanned data is than subject to demodulation (block R2) and conversion from a 2D data pattern into a 1D data stream (block 2D/1D). The demodulated data stream is de-interlaced (block $\pi^{-1}$) and finally, channel decoding (block R3) is performed. The result of the read process R is an output data stream Sy.

In an ideal situation, when the write and read process W, R would work perfectly, the input data stream Sa and the output data stream Sy would be identical. However, due to intersymbol interference and noise, this is not the case.

The microfilm 14 is a typical example for a two-dimensional data storage medium. On this type of data storage, the symbols representing the bit information, for example dark and light dots, are typically arranged in a grid. Consequently, bit information on the two-dimensional data storage medium can be considered a geometric pattern of variables.

In a laser exposure system, deterioration of bit information is mainly due to intersymbol interference and noise. It can be reasonably assumed that the intersymbol interference for a given symbol at a given position is only significantly influenced by the eight neighboring data points. Hence, a 3x3 pattern is considered.

For example, the below matrix A represents input data, which is to be stored on a two-dimensional storage medium, for example on microfilm 14. The matrix A comprises for example binary values a1 to a9. The process, which was illustrated with the reference to FIG. 1 is applicable for writing this pattern on microfilm.

The information, which is retrieved from the storage medium, however, differs from the input information. The below matrix comprising values y1 to y9 represents corresponding read out. Summarizing, formula 1 illustrates the write-read process by transformation of the matrix elements a1 to a9 into the retrieved values y1 to y9. In particular, the values y1 to y9 represent grey values.

$$A = \begin{bmatrix} a_1 & a_4 & a_7 \\ a_2 & a_5 & a_8 \\ a_3 & a_6 & a_9 \end{bmatrix} \quad \rightarrow \quad \begin{bmatrix} y_1 & y_4 & y_7 \\ y_2 & y_5 & y_8 \\ y_3 & y_6 & y_9 \end{bmatrix} \quad (1)$$

The bit information, which should be retrieved, is that of element y5, being located in the center of the matrix. Because of the mutual influence between the two-dimensional neighboring symbols, not only the element y5 is read-out. The values of all elements of the matrix, i.e. y1 to y9 are read-out. They are collected in a vector as it is shown in the below formula 2.

$$y \triangleq [y_1, y_2, \cdots, y_9]^T \quad (2)$$

Subsequently, a joint probability distribution for the vector y is calculated using the below formula 3.

$$p(y|A_i) = \sum_{m=1}^{M} \rho_{i,m} \frac{1}{\sqrt{2\pi \det(C_{i,m})}} \exp\left(-0.5(y - \mu_{i,m})^T (C_{i,m})^{-1}(y - \mu_{i,m})\right) \quad (3)$$

In formula 3 $\mu_{i,m}$ denotes a vector comprising the mean values of the Gaussian distributions. $C_{i,m}$ is a matrix comprising the corresponding covariance values. The index m indicates that the respective values correspond to the m-th component of the multi variant Gaussian distribution. The individual Gaussian distributions are weighted by $\rho_{i,m}$, wherein $\sum_{m=1}^{M} \rho_{i,m} = 1$.

In other words, using formula (3), a probability for the read-out vector y is determined for all data patterns Ai, which are possible in a given 3x3 arrangement, i.e. 512 patterns. It is understood, for larger data patterns, a higher number of data patterns are considered. The totality of possible arrangements of the binary data in the respective pattern defines the total number of data patterns.

The aim of the read-out process is to deliver binary values in the output data stream Sy. The binary value of the symbol a5 is determined by calculating the marginal probabilities using to the below formula 4.

$$\hat{a}_5 = \arg \max_{\tilde{a}_5 \in \{0,1\}} p(\tilde{a}_5|\boldsymbol{y}) \equiv \arg \max_{\tilde{a}_5 \in \{0,1\}} \sum_{A_i:\tilde{a}_5} p(\boldsymbol{y}|A_i)p(A_i) \qquad (4)$$

In other words, when the binary values are 0 and 1 are applied, the probability that the true bit information of the measured value for y5 is "0" is given by the following formula 5. Similarly, the probability for the occurrence of the binary value "1" is given by formula 6.

$$p(\tilde{a}_5 = 0|\boldsymbol{y}) = \sum_{A_i:\tilde{a}_5=0} p(A_i|\boldsymbol{y}) \equiv \sum_{A_i:\tilde{a}_5=0} p(\boldsymbol{y}|A_i)\, p(A_i) \qquad (5)$$

$$p(\tilde{a}_5 = 1|\boldsymbol{y}) = \sum_{A_i:\tilde{a}_5=1} p(A_i|\boldsymbol{y}) \equiv \sum_{A_i:\tilde{a}_5=1} p(\boldsymbol{y}|A_i)\, p(A_i) \qquad (6)$$

As can be seen from the above formula, the bit information of the symbol y5 is retrieved from the vector y, which means that all the measured values y1 to y9 are considered. In formula 4 to 6, $p(A_i)$ is the a priori probability for the occurrence of the data pattern Ai. If there is no a priori information about the data patterns Ai available, formula 4 can be reduced to the below formula 7.

$$\hat{a}_5 = \arg \max_{\tilde{a}_5} \sum_{A_i:\tilde{a}_5} p(\boldsymbol{y}|A_i) \qquad (7)$$

For determination of the bit value of y5, a maximum of the probability distribution for the respective binary value is determined. The difference between the values of the probability function for said binary values can be exploited in terms of reliability of the value. If there is a significant difference between the probabilities for the result "1" in comparison to the result "0", a high degree of reliability can be assumed. If not, the reliability of the determined bit information is rather poor.

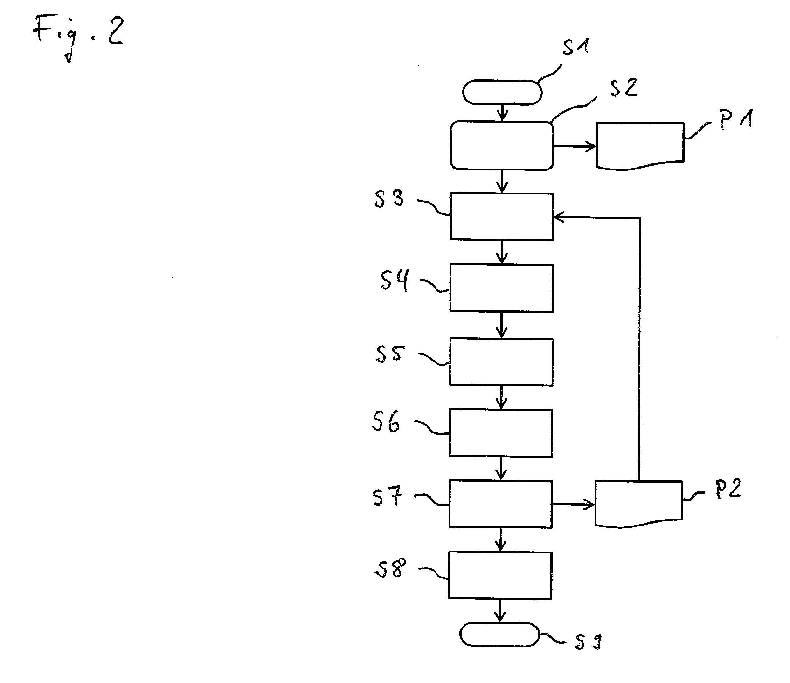

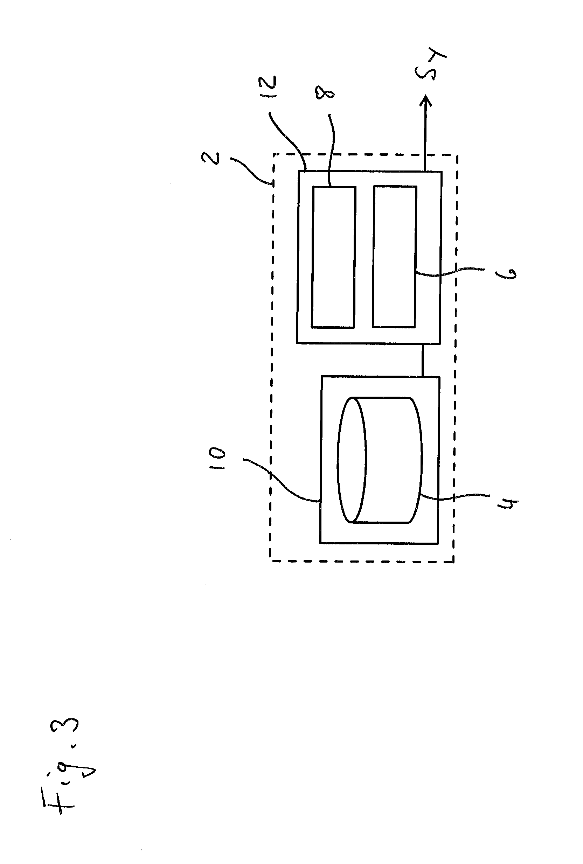

In FIG. 2, there is a simplified flow chart illustrating a method for detecting a symbol from a two-dimensional storage medium according to an embodiment of the invention. The method is particularly applicable in an apparatus 2, which is shown in FIG. 3.

The method and the apparatus will be explained in the following by making reference to the flow chart in FIG. 2 and the simplified block diagram showing the apparatus 2 in FIG. 3.

The method starts with step S1 and firstly and optionally, a training (step S2) is performed. During the training, few data frames with known data are used. Depending on the input data patterns, read-out patterns are reformulated into vectors and are included into different groups. For example, for a 3x3 square and for binary modulation, 512 groups are obtained, each of which consist of a 9-symbol read-out vector. For each group, Gaussian mixture model parameters $\{\rho_{i,m},\ \boldsymbol{\mu}_{i,m},\ \boldsymbol{C}_{i,m}\}$ , $1 \leq m \leq M$, are estimated, for example by means of an expectation-maximization algorithm, as shown in "A Gentle Tutorial of the EM Algorithm and its Application to Parameter Estimation for Gaussian Mixture and Hidden Markov Models", J. A. Bilmes, Technical report of U.C. Berkeley, TR-97-201, 1998.

The parameters are for example stored in a document P1, which is a specific parameter set-up for a reader 10 of the apparatus 2. This device is illustrated in the simplified block diagram of FIG. 3. The apparatus 2 for reading-out data from the two-dimensional data storage 4 comprises the reader 10. For example, the parameter set in the document P1 is specific for the reader 10 of this apparatus 2.

In a subsequent step S3 (FIG. 2) symbols from the storage medium 4 are captured. This includes capturing the center value y5 and the further values y1...y4, y6 ...y9 (see formula 1). The captured values y1...y9 are formulated as a vector in step S4 (see formula 2). Subsequently, in step S5, a probability is calculated for said vector y for all possible data patterns Ai according to formula 3. In step S6 the decision, which binary value is assigned to the read-out value y5 is determined according to formula 4 to 6. In step S7 soft information is retrieved, wherein the soft information can be stored in a further parameter set P2, which is applied for error correction during decoding in step S3. Finally, data is output in step S8 and the method ends in step S9.

The apparatus 2 in FIG. 3 therefore includes a processing unit 12 comprising an evaluation unit 6 and a selection unit 8. The processing unit 12 can be a conventional computer, which is configured to perform the method according to aspects of the invention. The processing unit 12 delivers the output data stream Sy. The evaluation unit 6 is configured to evaluate the joint probability distribution (formula 3) for a given vector (formula 2) and for all patterns Ai. The selection unit 8 is particularly suitable for summing-up values of the joint probability distribution for the captured vector y so as to determine a maximum probability for a bit value of the center element y5 (formula 4 to 6).

Table of References

| | |
|---|---|
| 2 | apparatus |
| 4 | storage medium |
| 6 | evaluation unit |
| 8 | selection unit |
| 10 | reader |
| 12 | processing unit |
| 14 | microfilm |

| | |
|---|---|
| P(Y\|Ai) | joint probability distribution |
| Ai | data pattern |
| y5 | center value |
| y1..y4, y6..y9 | further values |
| y1..y9 | captured values |
| y | vectorial observations |
| $\mu$ | vectorial averages |
| C | covariance matrixes |
| W | write process |
| Sa | input data stream |
| R | read process |
| Sy | output data stream |

**Claims**

1. Method for detecting a symbol from an observation (Y) comprising readout values from a local neighborhood of a two-dimensional storage medium (4), comprising the steps of:

   - evaluating a joint probability distribution (p(Y|Ai)) for the observation (Y) and all data patterns (Ai) which are possible in the local neighborhood;
   - choose as a detection output a weighted average of center values of the data patterns (Ai), using as weight for each data pattern (Ai) the value of the joint probability distribution (p(Y|Ai)) as evaluated for that data pattern (Ai);

   and **characterized in that** the joint probability distribution (p(Y|Ai)) is a multi variant Gaussian probability distribution which employs vectorial observations (Y), vectorial averages ($\mu$), and covariance matrixes (C).

2. Method according to claim 1, wherein a probability (p(Ai)) of the data pattern (Ai) is applied as a further weight for determination of the weighted average of the center values of the data patterns (Ai).

3. Method according to claim 1 or 2, further comprising the step of determining soft information being indicative of a reliability of the detection output, wherein a difference between the weighted averages of the center values for the binary values serves as a basis for said soft information.

**4.** Method according to any of claims 1 to 3, further comprising the step of capturing from the two-dimensional storage medium (4): a readout value (y5) at a center element and further readout values (y1..y4, y6.:y9) at elements located in the local neighborhood, wherein the readout values (y1..y9) are arranged in a vector (Y) so as to provide the vectorial observation (Y).

**5.** Method according to any of claims 1 to 4, wherein the detection output is a binary output of the detected value (y5) of the symbol, and wherein said binary output is determined by choosing a maximum of a first and a second probability for the first and second binary value, respectively, wherein

- the first probability for the first binary value is determined by summing up values of the joint probability distribution (p(Y|Ai)) for the observation (Y) and a first sub-set of the complete set of data patterns (Ai) comprising the first binary value as the center value and
- the second probability for the second binary value is determined by summing up values of the joint probability distribution (p(Y|Ai)) for the observation (Y) and a second sub-set of the complete set of data patterns (Ai) comprising the second binary value as the center value.

**6.** Method according to any of claims 1 to 5, wherein the joint probability distribution (p(Y|Ai)) is a Gaussian Mixture Model distribution.

**7.** Method according to claim 6, wherein parameters of the Gaussian Mixture Model are estimated from readout values with known data in a training step.

**8.** Apparatus (2) for detecting a symbol from an observation comprising a set of readout values from a local neighborhood of a two-dimensional storage medium (4), comprising:

- a first evaluation unit (6) configured to evaluate a joint probability distribution (p(Y|Ai)) for the observation and all data patterns (Ai) which are possible in the local neighborhood;
- a selection unit (8) configured to choose as a detection output a weighted average of center values of the data patterns (Ai), using as weight for each data pattern (Ai) the value of the joint probability distribution (p(Y|Ai)) as evaluated for that data pattern (Ai);

and **characterized in that** the joint probability distribution (p(Y|Ai)) is a multi variant Gaussian probability distribution, which employs vectorial observations (Y), vectorial averages ($\mu$), and covariance matrixes (C).

**9.** Apparatus (2) according to claim 8, further configured in that a probability (p(Ai)) of the data pattern (Ai) is applied as a further weight for determination of the weighted average of the center values of the data patterns (Ai).

**10.** Apparatus (2) according to claim 8 or 9, further comprising a second evaluation unit (8) configured to determine soft information being indicative of a reliability of the detection output, wherein a difference between the weighted averages of the center values for the binary values serves as a basis for said soft information.

**11.** Apparatus (2) according to any of claims 8 to 10, further comprising a reading unit configured to capture from the two-dimensional storage medium (4): a readout value (y5) at a center element and further readout values (y1...y4, y6...y9) at elements located in the local neighborhood, wherein the readout values (y1...y9) are arranged in a vector (Y) so as to provide the vectorial observation (Y).

**12.** Apparatus (2) according to any of claims 8 to 11, wherein the detection output is a binary output of the detected value (y5) of the symbol, and wherein the selection unit (8) is further configured in that said binary output is determined by choosing a maximum of a first and a second probability for the first and second binary value, respectively, wherein

- the first probability for the first binary value is determined by summing up values of the joint probability distribution (p(Y|Ai)) for the observation (Y) and a first sub-set of the complete set of data patterns (Ai) comprising the first binary value as the center value and
- the second probability for the second binary value is determined by summing up values of the joint probability distribution (p(Y|Ai)) for the observation (Y) and a second sub-set of the complete set of data patterns (Ai) comprising the second binary value as the center value.

**13.** Apparatus (2) according to any of claims 8 to 12, wherein the joint probability distribution (p(Y|Ai)) is a Gaussian Mixture Model distribution.

14. Apparatus according to claim 13, further configured in that parameters of the Gaussian Mixture Model are estimated from readout values with known data in a training step.

EP 3 016 019 A2

Fig. 1

Sa → W.1 → $\pi$ → 1D/2D → W2 → W3 → [14] → R1 → R2 → 2D/1D → $\pi^{-1}$ → R3 → Sy

W

R

14

Fig. 2

Fig.3

EP 3 016 019 A2

**REFERENCES CITED IN THE DESCRIPTION**

**Non-patent literature cited in the description**

- **VOGES C.** A two-dimensional channel model for digital data storage on microfilm. *IEEE Trans COM-58 (8),* 2011
- **VOGES C.** A two-dimensional channel model for digital data storage on microfilm. *IEEE Trans. COM-58 (8),* 2011

- **J. A. BILMES.** A Gentle Tutorial of the EM Algorithm and its Application to Parameter Estimation for Gaussian Mixture and Hidden Markov Models. *Technical report of U.C. Berkeley, TR-97-201,* 1998